# FASCICULE DE BREVET EUROPEEN

(11) **EP 3 883 795 B1**
(45) Date de publication et mention de la délivrance du brevet: **09.08.2023**
(21) Numéro de dépôt: 19831790.1
(22) Date de dépôt: 20.11.2019
(51) Int. Cl.: B60G 21/055, F16F 1/14

(54) **BARRE STABILISATRICE POUR VEHICULE**
STABILISIERUNGSSTANGE FÜR EIN FAHRZEUG
STABILIZING BAR FOR A VEHICLE

(30) Priorité: 20.11.2018 FR 1871631
(43) Date de publication de la demande: 29.09.2021
(73) Titulaire: Sogefi Suspensions, 78280 Guyancourt (FR)
(72) Inventeur: LANCIEN, Jean-François, 88110 RAON L' ETAPE (FR); OUAKKA, Abderrahman, 59500 DOUAI (FR); ROUY, Philippe, Etienne, 55000 CHARDOGNE (FR); RIDACKER, Renaud, 52100 ST- DIZIER (FR); COPPIN, Démis, 55500 NANCOIS SUR ORNAIN (FR); MEYER, Stephan, 59500 DOUAI (FR)
(74) Mandataire: Cabinet Beau de Loménie
(86) Numéro de dépôt international: PCT/FR2019/052765
(87) Numéro de publication internationale: WO 2020/104755

(56) Documents cités:
- EP-A2- 1 304 242
- WO-A1-2019/097198
- DE-A1-102013 103 461
- US-A1- 2011 101 630

## Description

### Domaine Technique

Le présent exposé concerne une barre stabilisatrice pour un véhicule et un procédé de fabrication d'une telle barre stabilisatrice.

### Technique antérieure

La plupart des véhicules à essieux sont pourvus d'ensembles stabilisateurs qui sont tels que les deux roues d'un même essieu sont généralement reliées par une barre stabilisatrice, également appelée barre antidévers ou barre anti-roulis.

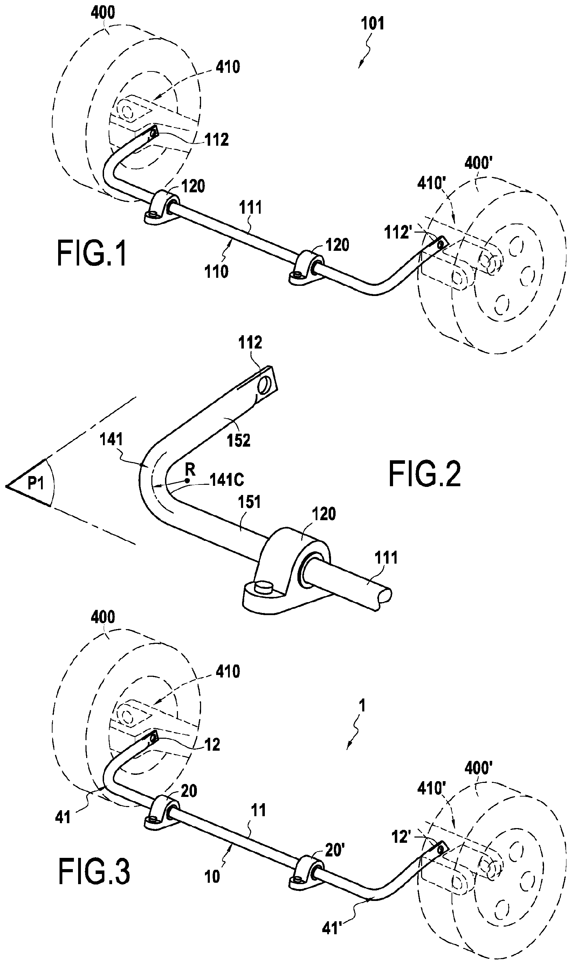

Un ensemble stabilisateur pour véhicule connu comprenant une telle barre stabilisatrice est représenté sur la Fig. 1.

L'ensemble stabilisateur 101 pour véhicule comprend une barre stabilisatrice 110. La barre stabilisatrice 110 est installée entre deux roues 400, 400' d'un même essieu. À cet effet, la barre stabilisatrice 110 est munie à ses extrémités de deux portions de fixation 112, 112'. La portion de fixation 112 est prévue pour être fixée à une partie du véhicule solidaire de la roue 400, dans le cas présent à un triangle de suspension 410 de la roue 400 via des biellettes (non représentées). De même, la portion de fixation 112' est prévue pour être fixée à une partie du véhicule solidaire de la roue 400', dans le cas présent à un triangle de suspension 410' de la roue 400' via des biellettes (non représentées).

La barre stabilisatrice 110 est donc un élément de suspension du véhicule qui forme un ressort tendant à solidariser les deux roues 400, 400', et qui permet ainsi de limiter le roulis lors des virages et de réduire les déformations subies par la suspension de manière à maintenir le plus possible les pneus à plat sur le sol et donc à conserver une adhérence maximale. La barre stabilisatrice 110 peut donc être sollicitée à la fois en torsion et en flexion.

La barre stabilisatrice 110 comprend aussi une portion centrale 111, qui est allongée. Deux paliers 120 destinés à être fixés sur le châssis du véhicule sont montés sur la barre stabilisatrice 110.

La barre stabilisatrice 110 est métallique, et typiquement fabriquée en acier.

En général, la barre stabilisatrice 110 est l'une des pièces du véhicule dont la forme est définie en dernier, en fonction de l'espace qui n'est pas déjà occupé par d'autres éléments du véhicule, comme par exemple des éléments structurels ou des éléments de suspension. La forme de la barre stabilisatrice 110 peut donc être relativement complexe. En pratique, cette forme est obtenue par cintrage d'un produit métallique, typiquement en acier, allongé et rectiligne, aussi appelé lopin.

La Fig. 2 représente plus en détail une forme typique de la barre stabilisatrice 110 obtenue par un tel cintrage. Lors d'un tel cintrage, le lopin est déformé localement en flexion élastoplastique, à froid ou à chaud. Cette flexion élastoplastique conduit localement à un arc plan. On voit ainsi sur la Fig. 2 que, entre la portion centrale 111 et la portion de fixation 112, la barre stabilisatrice 110 obtenue présente un arc plan (aussi appelé coude 141) contenu dans un plan P1, là où le lopin métallique a été déformé localement, et de portions droites 151, 152, là où le lopin métallique n'a pas été déformé localement. Le coude 141 présente un rayon de courbure R constant.

Lorsque la barre stabilisatrice 110 doit adopter une forme plus complexe en raison de l'encombrement du véhicule, elle peut aussi présenter plusieurs coudes séparés par des portions droites, les coudes étant contenus dans des plans différents les uns des autres de manière à donner à la barre stabilisatrice 110 une forme tridimensionnelle.

Toutefois, les coudes sont des régions particulièrement critiques du point de vue de la résistance mécanique, et tout particulièrement le coude 141, d'une part à cause de sa position (la plus proche du palier 120) au sein de la barre stabilisatrice 110, laquelle position conduit à un maximum de chargement à la fois en torsion et en flexion, et d'autre part en raison de sa forme même de coude, qui conduit à une concentration de contraintes, tout particulièrement dans la région intérieure 141C du coude 141. Il est donc absolument impératif de dimensionner la barre stabilisatrice 110, et donc le lopin métallique, de telle sorte que le coude 141 présente la résistance mécanique nécessaire.

Or, en pratique, le lopin métallique (et donc aussi la barre stabilisatrice 110) présente très fréquemment une section et un diamètre constants le long de toute sa longueur. Il en résulte que le dimensionnement de la barre stabilisatrice 110 au niveau du coude 141 détermine le dimensionnement de la barre stabilisatrice 110 tout entière. La barre stabilisatrice 110 est donc dimensionnée de façon adéquate au niveau du coude 141 mais surdimensionnée ailleurs, et ce tout particulièrement si la barre stabilisatrice 110 est prévue pour résister à de très fortes sollicitations. Ce surdimensionnement conduit à un excès de masse de la barre stabilisatrice et donc du véhicule. On note néanmoins que les documents US 2011 0101630, qui divulgue le préambule des revendications 1 et 6, EP 1 304 242 et DE 10 2013 103461 proposent de faire varier, par morceau, le rayon de courbure du coude. De plus, le document WO 2019 / 097198 A1, selon l'article 54(3) EPC, divulgue une barre stabilisatrice avec une portion courbée selon une courbe gauche.

Il existe donc un réel besoin pour une barre stabilisatrice pour véhicule ainsi qu'un procédé de fabrication d'une telle barre stabilisatrice qui soient dépourvus, au moins en partie, des inconvénients inhérents aux configurations connues précitées.

### Exposé de l'invention

Le présent exposé concerne une barre stabilisatrice pour un véhicule, selon la revendication 1.

Grâce au fait que le rayon de courbure soit strictement croissant à mesure que l'on s'éloigne du premier palier, les contraintes sont réparties plus uniformément au sein de la première portion courbée qu'avec un rayon de courbure constant.

Dans certains modes de réalisation, la première courbe présente un rayon de courbure qui est une fonction polynomiale de l'abscisse curviligne de ladite courbe.

Dans certains modes de réalisation, la première courbe présente un rayon de courbure qui est une fonction affine de l'abscisse curviligne de ladite courbe.

Dans certains modes de réalisation, la barre stabilisatrice comprend une pluralité de premières portions courbées entre la portion centrale et la première portion de fixation, et au moins la première portion courbée la plus proche du premier palier est courbée selon une première courbe présentant un rayon de courbure qui est strictement croissant à mesure que l'on s'éloigne du premier palier.

De cette manière, les contraintes sont réparties plus uniformément, comme mentionné ci-dessus, au sein de la première portion courbée qui est la plus proche du premier palier. Autrement dit, la première portion courbée, et en particulier sa région intérieure, présente une concentration de contraintes moindre que dans un coude à rayon de courbure constant. Or, comme mentionné ci-dessus, c'est la portion courbée la plus proche du palier qui détermine le dimensionnement de la barre stabilisatrice tout entière. On peut donc obtenir ou bien une barre stabilisatrice avec de meilleures propriétés mécaniques en partant d'un lopin métallique identique, ou bien une barre stabilisatrice plus légère avec des propriétés mécaniques identiques. Il est ainsi possible d'obtenir un gain en masse d'environ 4 % par rapport à une barre stabilisatrice réalisée dans le même acier.

Dans certains modes de réalisation, ladite première portion courbée la plus proche du premier palier est située entre le premier palier et la première portion de fixation.

Dans certains modes de réalisation, la barre stabilisatrice comprend en outre :
une deuxième portion de fixation configurée pour être fixée à une deuxième partie du véhicule solidaire d'une deuxième roue du véhicule ; et
un deuxième palier configuré pour être fixé au châssis du véhicule, la barre stabilisatrice comprenant, entre la portion centrale et la deuxième portion de fixation, une deuxième portion courbée,
la deuxième portion courbée étant courbée selon une deuxième courbe présentant un rayon de courbure qui est strictement croissant à mesure que l'on s'éloigne du deuxième palier.

Grâce au fait que le rayon de courbure soit croissant à mesure que l'on s'éloigne du deuxième palier, les contraintes sont réparties plus uniformément au sein de la deuxième portion courbée qu'avec un rayon de courbure constant, ce qui procure les mêmes avantages que pour la première portion courbée.

Dans certains modes de réalisation, la barre stabilisatrice comprend une pluralité de deuxièmes portions courbées entre le deuxième palier et la deuxième portion de fixation, et au moins la deuxième portion courbée la plus proche du deuxième palier est courbée selon une deuxième courbe présentant un rayon de courbure qui est strictement croissant à mesure que l'on s'éloigne du deuxième palier.

De cette manière, les contraintes sont réparties plus uniformément, comme mentionné ci-dessus, au sein de la deuxième portion courbée qui est la plus proche du deuxième palier, ce qui procure les mêmes avantages que pour la première portion courbée.

Dans certains modes de réalisation, ladite deuxième portion courbée la plus proche du deuxième palier est située entre le deuxième palier et la deuxième portion de fixation.

Dans certains modes de réalisation, la première courbe et la deuxième courbe sont symétriques.

La fabrication de la barre stabilisatrice est donc simplifiée. En particulier, lorsque la barre stabilisatrice est fabriquée par cintrage d'un lopin métallique, il suffit d'effectuer des opérations symétriques sur les deux extrémités du lopin métallique.

Le présent exposé concerne également une barre stabilisatrice pour un véhicule, selon la revendication 6.

Grâce au fait que le rayon de courbure soit strictement décroissant à mesure que l'on s'éloigne du premier palier, les contraintes sont réparties plus uniformément au sein de la première portion courbée qu'avec un rayon de courbure constant. Il est ainsi possible d'obtenir un gain en masse par rapport à une barre stabilisatrice réalisée dans le même acier.

Dans certains modes de réalisation, la première courbe présente un rayon de courbure qui est une fonction polynomiale de l'abscisse curviligne de ladite courbe.

Dans certains modes de réalisation, la première courbe présente un rayon de courbure qui est une fonction affine de l'abscisse curviligne de ladite courbe.

Dans certains modes de réalisation, la barre stabilisatrice comprend une pluralité de premières portions courbées entre la portion centrale et la première portion de fixation, et au moins la première portion courbée la plus proche du premier palier est courbée selon une première courbe présentant un rayon de courbure qui est strictement décroissant à mesure que l'on s'éloigne du premier palier.

Dans certains modes de réalisation, ladite première portion courbée la plus proche du premier palier est située entre le premier palier et la première portion de fixation.

Dans certains modes de réalisation, la barre stabilisatrice comprend en outre :
une deuxième portion de fixation configurée pour être fixée à une deuxième partie du véhicule solidaire d'une deuxième roue du véhicule ;
et un deuxième palier configuré pour être fixé au châssis du véhicule,
la barre stabilisatrice comprenant, entre la portion centrale et la deuxième portion de fixation, une deuxième portion courbée, la deuxième portion courbée étant courbée selon une deuxième courbe présentant un rayon de courbure qui est strictement décroissant à mesure que l'on s'éloigne du deuxième palier.

Grâce au fait que le rayon de courbure soit décroissant à mesure que l'on s'éloigne du deuxième palier, les contraintes sont réparties plus uniformément au sein de la deuxième portion courbée qu'avec un rayon de courbure constant, ce qui procure les mêmes avantages que pour la première portion courbée.

Dans certains modes de réalisation, la barre stabilisatrice comprend une pluralité de deuxièmes portions courbées entre le deuxième palier et la deuxième portion de fixation, et au moins la deuxième portion courbée la plus proche du deuxième palier est courbée selon une deuxième courbe présentant un rayon de courbure qui est strictement décroissant à mesure que l'on s'éloigne du deuxième palier.

De cette manière, les contraintes sont réparties plus uniformément, comme mentionné ci-dessus, au sein de la deuxième portion courbée qui est la plus proche du deuxième palier, ce qui procure les mêmes avantages que pour la première portion courbée.

Dans certains modes de réalisation, ladite deuxième portion courbée la plus proche du deuxième palier est située entre le deuxième palier et la deuxième portion de fixation.

Dans certains modes de réalisation, la première courbe et la deuxième courbe sont symétriques.

Dans certains modes de réalisation, la barre stabilisatrice présente une section creuse.

La barre stabilisatrice est alors plus légère que si elle était à section pleine, ce qui est avantageux en termes de masse totale de l'ensemble stabilisateur et donc du véhicule. En outre, le fait que la première portion courbée (et éventuellement la deuxième portion courbée) présente un rayon de courbure strictement croissant ou strictement décroissant, comme discuté ci-dessus, est tout particulièrement avantageux lorsque la barre stabilisatrice présente une section creuse. En effet, dans ce cas, le fait que les contraintes sont réparties plus uniformément dans la portion courbée permet d'augmenter la tenue en fatigue des parois de la portion courbée, tout particulièrement sa paroi intérieure, cette paroi intérieure n'étant que rarement grenaillée. En outre, le fait d'adopter un rayon de courbure strictement croissant ou strictement décroissant, comme discuté ci-dessus, permet de diminuer l'ovalisation de la section creuse de la barre, ce qui améliore encore la tenue en fatigue de la portion courbée.

Dans certains modes de réalisation, la barre stabilisatrice est fabriquée par cintrage d'un lopin métallique.

Dans certains modes de réalisation, le lopin métallique présente une section circulaire, elliptique, ovale, ou ovoïde. Cette section peut être pleine ou bien être creuse.

La barre stabilisatrice peut ainsi être fabriquée à partir du même type de produit de départ que les barres stabilisatrices connues décrites plus haut.

Dans certains modes de réalisation, le lopin métallique présente une section variable le long de sa longueur.

Il est ainsi possible d'optimiser au mieux le dimensionnement du lopin métallique, et donc de réaliser un gain en masse du véhicule.

Le présent exposé concerne également un ensemble stabilisateur pour véhicule comprenant une barre stabilisatrice selon l'une quelconque des possibilités précitées.

Les caractéristiques et avantages précités, ainsi que d'autres, apparaîtront à la lecture de la description détaillée qui suit, d'exemples de réalisation de la barre stabilisatrice et du procédé de fabrication proposés. Cette description détaillée fait référence aux dessins annexés.

Les dessins annexés sont schématiques et visent avant tout à illustrer les principes de l'invention.

Sur ces dessins, d'une figure (Fig.) à l'autre, des éléments (ou parties d'élément) identiques sont repérés par les mêmes signes de référence.

### Brève description des dessins

La Fig. 1 est une vue en perspective d'un ensemble stabilisateur pour véhicule connu.
La Fig. 2 est une vue en perspective de la barre stabilisatrice de l'ensemble stabilisateur pour véhicule de la Fig. 1.
La Fig. 3 est une vue en perspective d'un exemple d'ensemble stabilisateur pour véhicule selon l'exposé.
La Fig. 4 est une vue en perspective de la barre stabilisatrice de l'ensemble stabilisateur pour véhicule de la Fig. 3.
La Fig. 5 est une vue de la barre stabilisatrice de la Fig. 4, de dessus et perpendiculairement au plan P de la Fig. 4.
La Fig. 6 est une vue analogue à la Fig. 5, représentant une autre barre stabilisatrice pouvant être installée dans l'ensemble stabilisateur pour véhicule de la Fig. 3.
La Fig. 7 est une vue en perspective représentant un outil de mise en forme permettant de réaliser les barres stabilisatrices des Fig. 4 à 6 par cintrage d'un lopin métallique.

### Description des modes de réalisation

Afin de rendre plus concrète l'invention, des exemples d'ensembles stabilisateurs et de procédés de fabrication sont décrits en détail ci-après, en référence aux dessins annexés. Il est rappelé que l'invention ne se limite pas à ces exemples.

Un exemple d'ensemble stabilisateur 1 est représenté sur la Fig. 3.

L'ensemble stabilisateur 1 pour véhicule comprend une barre stabilisatrice 10. La barre stabilisatrice 10 est installée entre deux roues 400, 400' d'un même essieu. À cet effet, la barre stabilisatrice 10 est munie à ses extrémités de deux portions de fixation 12, 12'. La portion de fixation 12 est prévue pour être fixée à une partie du véhicule solidaire de la roue 400, dans le cas présent à un triangle de suspension 410 de la roue 400 via des biellettes (non représentées). De même, la portion de fixation 12' est prévue pour être fixée à une partie du véhicule solidaire de la roue 400', dans le cas présent à un triangle de suspension 410' de la roue 400' via des biellettes (non représentées).

La barre stabilisatrice 10 est donc un élément de suspension du véhicule qui forme un ressort tendant à solidariser les deux roues 400, 400'. La barre stabilisatrice 10 peut donc être sollicitée à la fois en torsion et en flexion.

La barre stabilisatrice 10 comprend aussi une portion centrale 11, qui est allongée. Deux paliers 20, 20' destinés à être fixés sur le châssis du véhicule sont montés sur la barre stabilisatrice 10. Le palier 20 est monté entre la portion centrale 11 et la portion de fixation 12. Le palier 20' est monté entre la portion centrale 11 et la portion de fixation 12'.

La barre stabilisatrice 10 est métallique, et typiquement fabriquée en acier.

La barre stabilisatrice 10 comprend, entre la portion centrale 11 et la portion de fixation 12, au moins une portion courbée. Sur les Fig. 3 à 5, seule la portion courbée 41 qui est la plus proche du palier 20 est représentée, étant entendu que la barre stabilisatrice 10 peut ou non comprendre d'autres portions courbées entre cette portion courbée 41 et la portion de fixation 12, et/ou d'autres portions courbées entre le palier 20 et la portion de fixation 12. En outre, sur les Fig. 3 à 5, la portion courbée 41 est située entre le palier 20 et la portion de fixation 12, mais il est précisé que la portion courbée 41 peut également être située entre le palier 20 et la portion centrale 11.

La barre stabilisatrice 10 peut comprendre une portion rectiligne 51 entre le palier 20 et la portion courbée 41. Cette portion rectiligne 51 facilite l'opération d'installation du palier 20 sur la barre stabilisatrice 10, laquelle opération d'installation est effectuée après la réalisation de la portion courbée 41 par cintrage. En outre, la barre stabilisatrice 10 comprend typiquement une portion rectiligne 52 entre la portion courbée 41 et la portion de fixation 12.

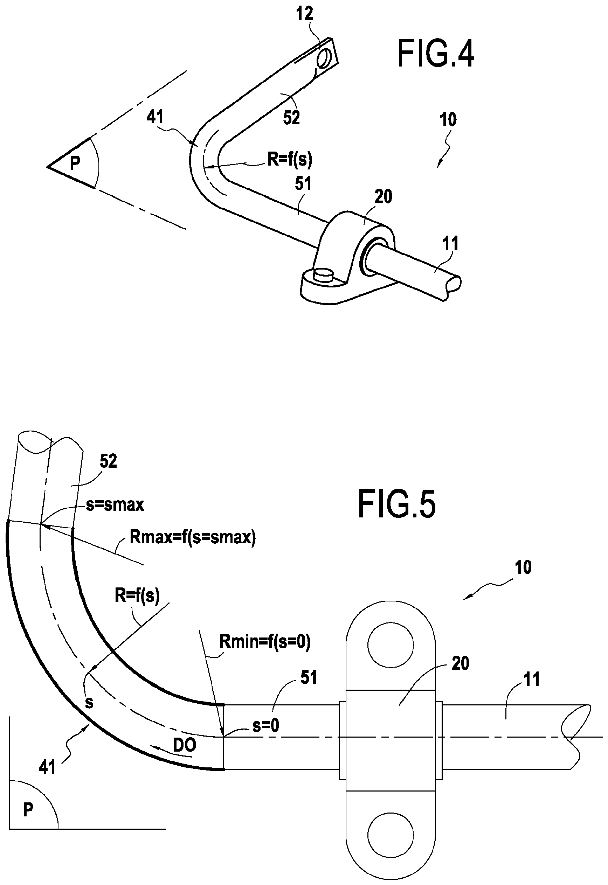

La portion courbée 41 est courbée selon une courbe qui présente un rayon de courbure qui est strictement croissant à mesure que l'on s'éloigne du palier 20, comme représenté schématiquement sur les Fig. 4 et 5.

Par « présente un rayon de courbure qui est strictement croissant à mesure que l'on s'éloigne du palier 20 », on entend désigner non seulement le fait que la courbe est telle que son rayon de courbure ne décroît pas entre son point initial le plus proche du palier 20 et son point final le plus éloigné du palier 20, de sorte qu'en particulier, son rayon de courbure à son point initial est strictement plus petit que son rayon de courbure à son point final, mais aussi le fait que la courbe ne présente pas de région de rayon de courbure constant ou décroissant. Ainsi, depuis la portion rectiligne 51 jusqu'à la portion rectiligne 52, la portion courbée 41 ne présente aucune région de rayon de courbure constant ou décroissant. En outre, la courbe est typiquement telle que son rayon de courbure varie continûment entre son point initial le plus proche du palier 20 et son point final le plus éloigné du palier 20.

Grâce au fait que le rayon de courbure soit strictement croissant à mesure que l'on s'éloigne du palier 20, les contraintes sont réparties plus uniformément au sein de la portion courbée 41 qu'avec un rayon de courbure constant.

Ceci est particulièrement bénéfique lorsque la portion courbée la plus proche du palier 20 - en l'espèce, la portion courbée 41 - est courbée selon une courbe qui présente un rayon de courbure qui est strictement croissant à mesure que l'on s'éloigne du palier 20.

En effet, les contraintes sont réparties plus uniformément, comme mentionné ci-dessus, au sein de la portion courbée 41 qui est la plus proche du palier 20. Autrement dit, la portion courbée 41, et en particulier sa région intérieure, présente une concentration de contraintes moindre que dans un coude à rayon de courbure constant. Or, comme mentionné ci-dessus, c'est la portion courbée la plus proche du palier qui détermine le dimensionnement de la barre stabilisatrice toute entière. On peut donc obtenir ou bien une barre stabilisatrice avec de meilleures propriétés mécaniques en partant d'un lopin métallique identique, ou bien une barre stabilisatrice plus légère avec des propriétés mécaniques identiques. Il est ainsi possible d'obtenir un gain en masse d'environ 4 % par rapport à une barre stabilisatrice réalisée dans le même acier.

Dans certaines variantes, la courbe présente un rayon de courbure qui est une fonction polynomiale f de l'abscisse curviligne s de ladite courbe. En d'autres termes, le rayon de courbure R de la courbe est tel que R = f(s), où f est une fonction polynomiale et s est l'abscisse curviligne de ladite courbe. Une telle fonction polynomiale f est, naturellement, continue, de sorte que le rayon de courbure R varie continûment comme discuté ci-dessus.

Au sens du présent exposé, par « fonction polynomiale », on entend toute fonction de la variable s du type aₙsⁿ + aₙ₋₁sⁿ⁻¹ +...+a₁s + a₀, où n est un entier positif (aussi appelé le degré du polynôme), et aₙ, aₙ₋₁, ..., a₁, a₀ sont des constantes réelles avec aₙ ≠ 0.

Naturellement, la fonction polynomiale f est de degré au moins égal à 1, de sorte que le rayon de courbure R soit effectivement strictement croissant entre Rmin = f(s = 0) et Rmax = f(s = smax) sur l'intervalle [0 ; smax] d'abscisse curviligne s à considérer pour la courbe. En outre, la fonction polynomiale f est naturellement strictement positive, compte tenu du fait qu'un rayon de courbure est par définition strictement positif.

En outre, l'abscisse curviligne s de la courbe est définie de sorte que son zéro soit au point de la courbe qui est le plus proche du palier 20, c'est-à-dire, dans l'exemple de la Fig. 5, au point de la courbe qui est au contact de la portion rectiligne 51. En outre, la courbe est orientée de telle sorte que son abscisse curviligne s croît lorsque l'on parcourt la courbe en s'éloignant du palier 20. Le sens d'orientation DO de l'abscisse curviligne est représenté sur la Fig. 5.

Dans certaines variantes particulières, la courbe présente un rayon de courbure qui est une fonction affine de l'abscisse curviligne de ladite courbe.

Par « fonction affine », on entend une fonction polynomiale de degré 1, c'est-à-dire une fonction de la variable s du type a₁s + a₀ où a₁, a₀ sont des constantes réelles. La fonction affine est naturellement strictement positive sur l'intervalle [0 ; smax] d'abscisse curviligne s à considérer pour la courbe, compte tenu du fait qu'un rayon de courbure est par définition strictement positif.

Dans certains modes de réalisation, la barre stabilisatrice 10 comprend, entre la portion centrale 11 et la portion de fixation 12', au moins une deuxième portion courbée. Sur les Fig. 3 à 5, seule la deuxième portion courbée 41' qui est la plus proche du palier 20' est représentée, étant entendu que la barre stabilisatrice 10 peut ou non comprendre d'autres portions courbées entre cette deuxième portion courbée 41' et la portion de fixation 12', et/ou d'autres portions courbées entre le palier 20' et la portion de fixation 12'. En outre, sur les Fig. 3 à 5, la portion courbée 41' est située entre le palier 20' et la portion de fixation 12', mais il est précisé que la portion courbée 41' peut également être située entre le palier 20' et la portion centrale 11'.

La barre stabilisatrice 10 peut comprendre une portion rectiligne (non référencée) entre le palier 20' et la portion courbée 41'. Cette portion rectiligne facilite l'opération d'installation du palier 20' sur la barre stabilisatrice 10, laquelle opération d'installation est effectuée après la réalisation de la portion courbée 41' par cintrage.

Comme la portion courbée 41, la deuxième portion courbée 41' est courbée selon une deuxième courbe qui présente un rayon de courbure qui est strictement croissant à mesure que l'on s'éloigne du palier 20', avec les mêmes avantages que pour la portion courbée 41.

En outre, comme la courbe de la portion courbée 41, la deuxième courbe peut présenter un rayon de courbure qui est une fonction polynomiale, de préférence affine, de l'abscisse curviligne de ladite deuxième courbe, avec les mêmes avantages que pour la portion courbée 41.

Dans certains modes de réalisation, la courbe de la portion courbée 41 et la deuxième courbe de la deuxième portion courbée 41' sont symétriques. Plus particulièrement, dans certains modes de réalisation, la barre stabilisatrice 10 peut présenter une symétrie plane par rapport à un plan passant par le centre de la portion centrale 11. Ceci simplifie la fabrication de la barre stabilisatrice 10 par cintrage, car il suffit alors d'effectuer des opérations symétriques sur les deux extrémités du lopin métallique.

On précise ici que la courbe de la portion courbée 41 et la deuxième courbe de la deuxième portion courbée 41' sont planes, c'est-à-dire entièrement contenues dans un seul plan, en l'espèce le plan P représenté sur les Fig. 4 et 5.

La barre stabilisatrice 10 est en général métallique. Par « métallique », on entend que la barre stabilisatrice 10 est réalisée en un élément métallique ou en un alliage métallique. Dans certains modes de réalisation, la barre stabilisatrice 10 est réalisée en acier, et de préférence en un acier adapté pour subir des traitements thermiques de trempe et de revenu.

La barre stabilisatrice 10 peut avoir une section circulaire, elliptique, ovale, ou ovoïde. Dans le présent exposé, « ovale » désigne une forme comprenant deux arcs de cercles symétriques entre eux dont les extrémités respectives sont reliées par deux droites parallèles entre elles, et qui présente donc deux axes de symétrie. En outre, la barre stabilisatrice 10 peut avoir une section pleine ou bien une section creuse. Dans certains modes de réalisation, la barre stabilisatrice 10 présente une section variable le long de sa longueur.

La barre stabilisatrice 10 peut avoir subi des traitements thermiques, par exemple de trempe et de revenu, prévus pour augmenter sa résistance mécanique et sa durabilité. La surface extérieure de la barre stabilisatrice 10 peut être peinte et/ou avoir subi divers traitements de surface, tels que des traitements anti-corrosion et/ou anti-gravillons, etc., prévus pour augmenter la résistance mécanique et la durabilité de la barre stabilisatrice 10.

La barre stabilisatrice 10 peut être fabriquée par cintrage d'un lopin métallique.

Par « lopin métallique », on entend un produit métallique, allongé et rectiligne. Par « métallique », on entend que le lopin est réalisé en un élément métallique ou en un alliage métallique. Dans certains modes de réalisation, le lopin métallique est en acier, et de préférence en un acier adapté pour subir des traitements thermiques de trempe et de revenu.

Le lopin métallique peut avoir une section circulaire, elliptique, ovale ou ovoïde, qui peut être pleine ou bien creuse, correspondant à la section désirée de la barre stabilisatrice 10 à fabriquer. Dans certains modes de réalisation, le lopin métallique présente une section variable le long de sa longueur.

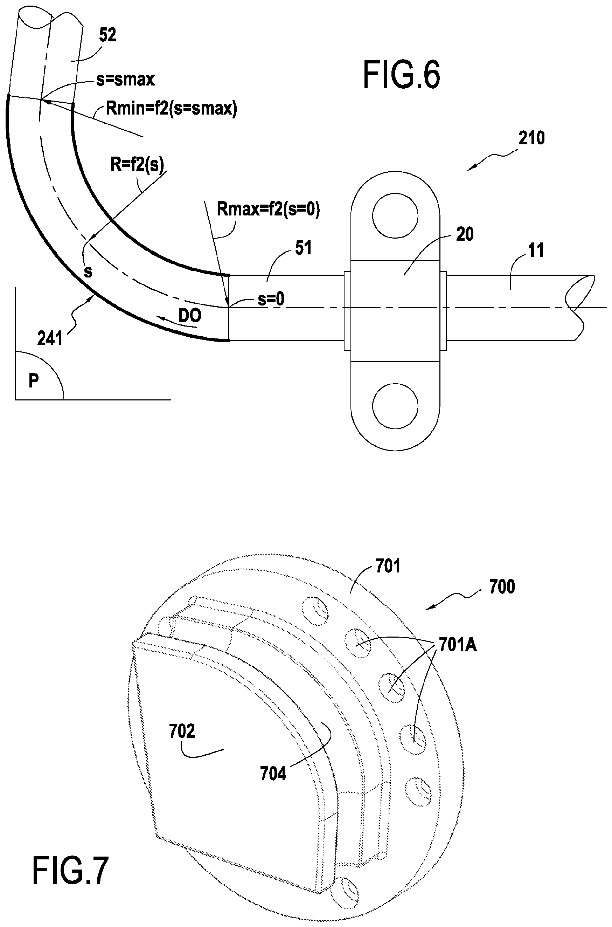

Plus particulièrement, la barre stabilisatrice 10 peut être fabriquée par cintrage par enroulement du lopin métallique autour d'un outil de forme. La Fig. 7 représente en perspective un outil de forme 700 adapté pour ce cintrage par enroulement autour d'un outil de forme.

Comme représenté sur la Fig. 7, l'outil de forme comprend une partie de fixation 701 et une partie de mise en forme 702. La partie de fixation 701 est apte à permettre la fixation de l'outil de forme 700 à un bâti, par exemple à l'aide d'écrous reçus dans des trous traversants 701A. La partie de mise en forme 702 est en saillie par rapport à la partie de fixation 701 et présente une gorge 704 dont la forme correspond à la forme de la portion courbée 41, 41' à réaliser. La portion courbée 41, 41' est réalisée en maintenant une partie du lopin métallique en place contre une extrémité de la gorge 704, et en appliquant sur le lopin métallique un effort amenant la paroi extérieure du lopin contre les parois de la gorge 704. L'outillage adapté pour ce faire est bien connu en soi et n'est donc pas décrit plus en détail ici.

La Fig. 6 représente une barre stabilisatrice 210 selon une variante de réalisation. Sur la Fig. 6, les éléments identiques à ceux des Fig. 3 à 5 portent les mêmes signes de référence et ne sont pas décrits en détail à nouveau.

La barre stabilisatrice 210 comprend, entre la portion centrale 11 et la portion de fixation 12, au moins une portion courbée 241. Sur la Fig. 6, seule la portion courbée 241 qui est la plus proche du palier 20 est représentée, étant entendu que la barre stabilisatrice 10 peut ou non comprendre d'autres portions courbées entre cette portion courbée 241 et la portion de fixation 12, et/ou d'autres portions courbées entre le palier 20 et la portion de fixation 12. En outre, sur la Fig. 6, la portion courbée 241 est située entre le palier 20 et la portion de fixation 12, mais il est précisé que la portion courbée 241 peut également être située entre le palier 20 et la portion centrale 11.

La portion courbée 241 est analogue à la portion courbée 41, à ceci près que la portion courbée 241 est courbée selon une courbe qui présente un rayon de courbure qui est strictement décroissant à mesure que l'on s'éloigne du palier 20, comme représenté schématiquement sur la Fig. 6.

Par « présente un rayon de courbure qui est strictement décroissant à mesure que l'on s'éloigne du palier 20 », on entend désigner non seulement le fait que la courbe est telle que son rayon de courbure ne croît pas entre son point initial le plus proche du palier 20 et son point final le plus éloigné du palier 20, de sorte qu'en particulier, son rayon de courbure à son point initial est strictement plus grand que son rayon de courbure à son point final, mais aussi le fait que la courbe ne présente pas de région de rayon de courbure constant ou croissant. Ainsi, depuis la portion rectiligne 51 jusqu'à la portion rectiligne 52, la portion courbée 241 ne présente aucune région de rayon de courbure constant ou croissant. En outre, la courbe est typiquement telle que son rayon de courbure varie continûment entre son point initial le plus proche du palier 20 et son point final le plus éloigné du palier 20.

Grâce au fait que le rayon de courbure soit strictement décroissant à mesure que l'on s'éloigne du palier 20, les contraintes sont réparties plus uniformément au sein de la portion courbée 241 qu'avec un rayon de courbure constant.

Ceci est particulièrement bénéfique lorsque la portion courbée la plus proche du palier 20 - en l'espèce, la portion courbée 241 - est courbée selon une courbe qui présente un rayon de courbure qui est strictement décroissant à mesure que l'on s'éloigne du palier 20.

En effet, les contraintes sont réparties plus uniformément, comme mentionné ci-dessus, au sein de la portion courbée 241 qui est la plus proche du palier 20. Autrement dit, la portion courbée 241, et en particulier sa région intérieure, présente une concentration de contraintes moindre que dans un coude à rayon de courbure constant. Or, comme mentionné ci-dessus, c'est la portion courbée la plus proche du palier qui détermine le dimensionnement de la barre stabilisatrice toute entière. On peut donc obtenir ou bien une barre stabilisatrice avec de meilleures propriétés mécaniques en partant d'un lopin métallique identique, ou bien une barre stabilisatrice plus légère avec des propriétés mécaniques identiques. Il est ainsi possible d'obtenir un gain en masse par rapport à une barre stabilisatrice réalisée dans le même acier.

Dans certaines variantes, la courbe présente un rayon de courbure qui est une fonction polynomiale f2 de l'abscisse curviligne s de ladite courbe. En d'autres termes, le rayon de courbure R de la courbe est tel que R = f2(s), où f2 est une fonction polynomiale et s est l'abscisse curviligne de ladite courbe. Une telle fonction polynomiale f2 est, naturellement, continue, de sorte que le rayon de courbure R varie continûment comme discuté ci-dessus.

Naturellement, la fonction polynomiale f2 est de degré au moins égal à 1, de sorte que le rayon de courbure R soit effectivement strictement décroissant entre Rmax = f2 (s = 0) et Rmin = f2(s = smax) sur l'intervalle [0 ; smax] d'abscisse curviligne s à considérer pour la courbe. En outre, la fonction polynomiale f2 est naturellement strictement positive, compte tenu du fait qu'un rayon de courbure est par définition strictement positif.

En outre, l'abscisse curviligne s de la courbe est définie de sorte que son zéro soit au point de la courbe qui est le plus proche du palier 20, c'est-à-dire, dans l'exemple de la Fig. 6, au point de la courbe qui est au contact de la portion rectiligne 51. En outre, la courbe est orientée de telle sorte que son abscisse curviligne s croît lorsque l'on parcourt la courbe en s'éloignant du palier 20. Le sens d'orientation DO de l'abscisse curviligne est représenté sur la Fig. 6.

Il est précisé que la barre stabilisatrice 210 peut être fabriquée par cintrage, de façon analogue à la barre stabilisatrice 10. Il est enfin précisé que la barre stabilisatrice 210 peut comprendre, entre la portion centrale 11 et la portion de fixation 12', au moins une deuxième portion courbée analogue à la deuxième portion courbée 41' décrite ci-dessus en rapport avec la barre stabilisatrice 10.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un produit ou à un dispositif, et inversement, toutes les caractéristiques décrites en référence à un produit ou à un dispositif sont transposables, seules ou en combinaison, à un procédé.

## Revendications

1. Barre stabilisatrice (10) pour un véhicule, comprenant :
une portion centrale (11), laquelle est allongée ;
une première portion de fixation (12) configurée pour être fixée à une première partie du véhicule (410) solidaire d'une première roue du véhicule (400) ; et
un premier palier (20) configuré pour être fixé au châssis du véhicule, la barre stabilisatrice (10) comprenant, entre le premier palier (20) et l'une de la portion centrale (11) et de la première portion de fixation (12), une première portion rectiligne (51), une première portion courbée (41), et une deuxième portion rectiligne (52), la première portion courbée (41) s'étendant entre la première portion rectiligne (51) et la deuxième portion rectiligne (52) et **caractérisée en ce que** la première portion courbée (41) est courbée selon une première courbe plane présentant un rayon de courbure qui est strictement croissant à mesure que l'on s'éloigne du premier palier (20), de sorte que la première portion courbée (41) ne présente aucune région de rayon de courbure constant ou décroissant depuis la première portion rectiligne (51) jusqu'à la deuxième portion rectiligne (52).

2. Barre stabilisatrice selon la revendication 1, dans laquelle la première courbe présente un rayon de courbure qui est une fonction polynomiale de l'abscisse curviligne de ladite courbe.

3. Barre stabilisatrice selon la revendication 2, dans laquelle la première courbe présente un rayon de courbure qui est une fonction affine de l'abscisse curviligne de ladite courbe.

4. Barre stabilisatrice selon l'une quelconque des revendications 1 à 3, comprenant une pluralité de premières portions courbées entre la portion centrale (11) et la première portion de fixation (12), et dans laquelle au moins la première portion courbée (41) la plus proche du premier palier (20) est courbée selon une première courbe présentant un rayon de courbure qui est strictement croissant à mesure que l'on s'éloigne du premier palier (20).

5. Barre stabilisatrice selon la revendication 4, dans laquelle ladite première portion courbée (41) la plus proche du premier palier (20) est située entre le premier palier (20) et la première portion de fixation (12).

6. Barre stabilisatrice (210) pour un véhicule, comprenant :
une portion centrale (11), laquelle est allongée ;
une première portion de fixation (12) configurée pour être fixée à une première partie du véhicule (410) solidaire d'une première roue du véhicule (400) ; et
un premier palier (20) configuré pour être fixé au châssis du véhicule,
la barre stabilisatrice (210) comprenant, entre le premier palier (20) et l'une de la portion centrale (11) et de la première portion de fixation (12), une première portion rectiligne (51), une première portion courbée (241), et une deuxième portion rectiligne (52), la première portion courbée s'étendant entre la première portion rectiligne (51) et la deuxième portion rectiligne (52) et
**caractérisée en ce que** la première portion courbée (241) est
courbée selon une première courbe plane présentant un rayon de courbure qui est strictement décroissant à mesure que l'on s'éloigne du premier palier (20), de sorte que la première portion courbée (241) ne présente aucune région de rayon de courbure constant ou croissant depuis la première portion rectiligne (51) jusqu'à la deuxième portion rectiligne (52).

7. Barre stabilisatrice selon la revendication 6, dans laquelle la première courbe présente un rayon de courbure qui est une fonction polynomiale de l'abscisse curviligne de ladite courbe.

8. Barre stabilisatrice selon la revendication 7, dans laquelle la première courbe présente un rayon de courbure qui est une fonction affine de l'abscisse curviligne de ladite courbe.

9. Barre stabilisatrice selon l'une quelconque des revendications 6 à 8, comprenant une pluralité de premières portions courbées entre la portion centrale (11) et la première portion de fixation (12), et dans laquelle au moins la première portion courbée (241) la plus proche du premier palier (20) est courbée selon une première courbe présentant un rayon de courbure qui est strictement décroissant à mesure que l'on s'éloigne du premier palier (20).

10. Barre stabilisatrice selon la revendication 9, dans laquelle ladite première portion courbée (241) la plus proche du premier palier (20) est située entre le premier palier (20) et la première portion de fixation (12).

11. Barre stabilisatrice selon l'une quelconque des revendications 1 à 10, laquelle présente une section creuse.

12. Barre stabilisatrice selon l'une quelconque des revendications 1 à 11, laquelle est fabriquée par cintrage d'un lopin métallique.

13. Barre stabilisatrice selon la revendication 12, dans laquelle le lopin métallique présente une section circulaire, elliptique, ovale, ou ovoïde.

14. Barre stabilisatrice selon la revendication 12 ou 13, dans laquelle le lopin métallique (300) présente une section variable le long de sa longueur.

## Patentansprüche

1. Stabilisierungsstange (10) für ein Fahrzeug, umfassend:
einen Mittelabschnitt (11), der länglich ist,
einen ersten Befestigungsabschnitt (12), der dazu ausgestaltet ist, an einem ersten Teil des Fahrzeugs (410) einstückig mit einem ersten Rad des Fahrzeugs (400) befestigt zu sein, und
ein erstes Lager (20), das dazu ausgestaltet ist, an dem Fahrgestell des Fahrzeugs befestigt zu sein, wobei die Stabilisierungsstange (10) zwischen dem ersten Lager (20) und einem von dem Mittelabschnitt (11) und dem ersten Befestigungsabschnitt (12) einen ersten geradlinigen Abschnitt (51), einen ersten gekrümmten Abschnitt (41) und einen zweiten geradlinigen Abschnitt (52) umfasst, wobei sich der erste gekrümmte Abschnitt (41) zwischen dem ersten geradlinigen Abschnitt (51) und dem zweiten geradlinigen Abschnitt (52) erstreckt und **dadurch gekennzeichnet, dass** der erste gekrümmte Abschnitt (41) entlang einer ersten flachen Krümmung gekrümmt ist, die einen Krümmungsradius aufweist, der mit zunehmender Entfernung von dem ersten Lager (20) streng zunimmt, so dass der erste gekrümmte Abschnitt (41) keinen Bereich mit konstantem oder abnehmendem Krümmungsradius von dem ersten geradlinigen Abschnitt (51) zu dem zweiten geradlinigen Abschnitt (52) aufweist.

2. Stabilisierungsstange nach Anspruch 1, wobei die erste Krümmung einen Krümmungsradius aufweist, der eine Polynomfunktion der krummlinigen Abszisse der Krümmung ist.

3. Stabilisierungsstange nach Anspruch 2, wobei die erste Krümmung einen Krümmungsradius aufweist, der eine affine Funktion der krummlinigen Abszisse der Krümmung ist.

4. Stabilisierungsstange nach einem der Ansprüche 1 bis 3, umfassend mehrere erste gekrümmte Abschnitte zwischen dem Mittelabschnitt (11) und dem ersten Befestigungsabschnitt (12), und wobei zumindest der erste gekrümmte Abschnitt (41), der dem ersten Lager (20) am nächsten liegt, entlang einer ersten Krümmung gekrümmt ist, die einen Krümmungsradius aufweist, der mit zunehmender Entfernung von dem ersten Lager (20) streng zunimmt.

5. Stabilisierungsstange nach Anspruch 4, wobei sich der erste gekrümmte Abschnitt (41), der dem ersten Lager (20) am nächsten liegt, zwischen dem ersten Lager (20) und dem ersten Befestigungsabschnitt (12) befindet.

6. Stabilisierungsstange (210) für ein Fahrzeug, umfassend:
einen Mittelabschnitt (11), der länglich ist,
einen ersten Befestigungsabschnitt (12), der dazu ausgestaltet ist, an einem ersten Teil des Fahrzeugs (410) einstückig mit einem ersten Rad des Fahrzeugs (400) befestigt zu sein, und
ein erstes Lager (20), das dazu ausgestaltet ist, an dem Fahrgestell des Fahrzeugs befestigt zu sein, wobei die Stabilisierungsstange (210) zwischen dem ersten Lager (20) und einem von dem Mittelabschnitt (11) und dem ersten Befestigungsabschnitt (12) einen ersten geradlinigen Abschnitt (51), einen ersten gekrümmten Abschnitt (241) und einen zweiten geradlinigen Abschnitt (52) umfasst, wobei sich der erste gekrümmte Abschnitt zwischen dem ersten geradlinigen Abschnitt (51) und dem zweiten geradlinigen Abschnitt (52) erstreckt und **dadurch gekennzeichnet, dass** der erste gekrümmte Abschnitt (241) entlang einer ersten flachen Krümmung gekrümmt ist, die einen Krümmungsradius aufweist, der mit zunehmender Entfernung von dem ersten Lager (20) streng abnimmt, so dass der erste gekrümmte Abschnitt (241) keinen Bereich mit konstantem oder zunehmendem Krümmungsradius von dem ersten geradlinigen Abschnitt (51) zu dem zweiten geradlinigen Abschnitt (52) aufweist.

7. Stabilisierungsstange nach Anspruch 6, wobei die erste Krümmung einen Krümmungsradius aufweist, der eine Polynomfunktion der krummlinigen Abszisse der Krümmung ist.

8. Stabilisierungsstange nach Anspruch 7, wobei die erste Krümmung einen Krümmungsradius aufweist, der eine affine Funktion der krummlinigen Abszisse der Krümmung ist.

9. Stabilisierungsstange nach einem der Ansprüche 6 bis 8, umfassend mehrere erste gekrümmte Abschnitte zwischen dem Mittelabschnitt (11) und dem ersten Befestigungsabschnitt (12), und wobei zumindest der erste gekrümmte Abschnitt (241), der dem ersten Lager (20) am nächsten liegt, entlang einer ersten Krümmung gekrümmt ist, die einen Krümmungsradius aufweist, der mit zunehmender Entfernung von dem ersten Lager (20) streng abnimmt.

10. Stabilisierungsstange nach Anspruch 9, wobei sich der erste gekrümmte Abschnitt (241), der dem ersten Lager (20) am nächsten liegt, zwischen dem ersten Lager (20) und dem ersten Befestigungsabschnitt (12) befindet.

11. Stabilisierungsstange nach einem der Ansprüche 1 bis 10, die ein Hohlprofil aufweist.

12. Stabilisierungsstange nach einem der Ansprüche 1 bis 11, die durch Biegen eines Metallstücks hergestellt ist.

13. Stabilisierungsstange nach Anspruch 12, wobei das Metallstück einen kreisförmigen, elliptischen, ovalen oder eiförmigen Querschnitt aufweist.

14. Stabilisierungsstange nach Anspruch 12 oder 13, wobei das Metallstück (300) einen variablen Querschnitt entlang seiner Länge aufweist.

## Claims

1. A stabilizing bar (10) for a vehicle, comprising:
a central portion (11), which is elongate;
a first attachment portion (12) configured to be attached to a first part of the vehicle (410) secured to a first wheel of the vehicle (400); and
a first bearing (20) configured to be attached to the chassis of the vehicle,
the stabilizing bar (10) comprising, between the first bearing (20) and one of the central portion (11) and of the first attachment portion (12), a first rectilinear portion (51), a first curved portion (41), and a second rectilinear portion (52), the first curved portion (41) extending between the first rectilinear portion (51) and the second rectilinear portion (52) and **characterized in that** the first curved portion (41) is curved along a first planar curve having a radius of curvature which is strictly increasing with increasing distance from the first bearing (20), so that the first curved portion (41) has no region with a constant or decreasing radius of curvature from the first rectilinear portion (51) until the second rectilinear portion (52).

2. The stabilizing bar according to claim 1, wherein the first curve has a radius of curvature which is a polynomial function of the curvilinear abscissa of said curve.

3. The stabilizing bar according to claim 2, wherein the first curve has a radius of curvature which is an affine function of the curvilinear abscissa of said curve.

4. The stabilizing bar according to any one of claims 1 to 3, comprising a plurality of first curved portions between the central portion (11) and the first attachment portion (12), and in which at least the first curved portion (41) closest to the first bearing (20) is curved along a first curve having a radius of curvature which is strictly increasing with increasing distance from the first bearing (20).

5. The stabilizing bar according to claim 4, wherein said first curved portion (41) closest to the first bearing (20) is located between the first bearing (20) and the first attachment portion (12).

6. A stabilizing bar (210) for a vehicle, comprising:
a central portion (11), which is elongate;
a first attachment portion (12) configured to be attached to a first part of the vehicle (410) secured to a first wheel of the vehicle (400); and
a first bearing (20) configured to be attached to the chassis of the vehicle,
the stabilizing bar (210) comprising, between the first bearing (20) and one of the central portion (11) and of the first attachment portion (12), a first rectilinear portion (51), a first curved portion (241), and a second rectilinear portion (52),
the first curved portion extending between the first rectilinear portion (51) and the second rectilinear portion (52) and **characterized in that** the first curved portion (241) is curved along a first planar curve having a radius of curvature which is strictly decreasing with increasing distance from the first bearing (20), so that the first curved portion (241) has no region with a constant or increasing radius of curvature from the first rectilinear portion (51) until the second rectilinear portion (52).

7. The stabilizing bar according to claim 10, wherein the first curve has a radius of curvature which is a polynomial function of the curvilinear abscissa of said curve.

8. The stabilizing bar according to claim 11, wherein the first curve has a radius of curvature which is an affine function of the curvilinear abscissa of said curve.

9. The stabilizing bar according to any one of claims 10 to 12, comprising a plurality of first curved portions between the central portion (11) and the first attachment portion (12), and in which at least the first curved portion (241) closest to the first bearing (20) is curved along a first curve having a radius of curvature which is strictly decreasing with increasing distance from the first bearing (20).

10. The stabilizing bar according to claim 13, wherein said first curved portion (241) closest to the first bearing (20) is located between the first bearing (20) and the first attachment portion (12).

11. The stabilizing bar according to any one of claims 1 to 18, which has a hollow cross section.

12. The stabilizing bar according to any one of claims 1 to 19, which is manufactured by bending of a metallic billet.

13. The stabilizing bar according to claim 20, wherein the metallic billet has a circular, elliptical, oval or ovoid cross section.

14. The stabilizing bar according to claim 20 or 21, wherein the metallic billet (300) has a variable cross section along its length.
